# FASCICULE DE BREVET EUROPEEN

(11) **EP 0 467 725 B1**
(45) Date de publication et mention de la délivrance du brevet: **19.01.1994**
(21) Numéro de dépôt: 91401513.6
(22) Date de dépôt: 10.06.1991
(51) Int. Cl.: F16D 25/12, F16D 25/11, F16D 65/72, F16D 65/74, F16D 65/76

(54) **Actionneur hydraulique à rattrapage d'usure**
Hydraulikantrieb mit Nachstellvorrichtung
Hydraulic actuator with slack adjuster

(30) Priorité: 17.07.1990 IT 6754990
(43) Date de publication de la demande: 22.01.1992
(73) Titulaire: AlliedSignal Automotive Italia Spa, 26013 Crema (IT)
(72) Inventeur: Cadeddu, Leonardo, BENDIX EUROPE, F-93700 Drancy (FR)
(74) Mandataire: Bentz, Jean-Paul

(56) Documents cités:
- DE-A- 2 124 948
- US-A- 3 171 526

## Description

La présente invention concerne un actionneur hydraulique à rattrapage d'usure commandant par exemple un embrayage d'un véhicule automobile.

Un tel actionneur à rattrapage d'usure est par exemple décrit dans EP-A- 0 310 733.

Il comprend un corps dans lequel est formé un alésage borgne où coulisse de façon étanche un premier piston sous l'effet de la pression d'un fluide dans une première chambre, un deuxième piston étant monté à coulissement dans un alésage pratiqué dans le premier piston et sur lequel une tige de sortie prend appui, une deuxième chambre étant ainsi définie entre les premier et deuxième pistons, un moyen de valve étant prévu pour assurer une communication hydraulique entre les première et deuxième chambres lorsque l'actionneur est au repos et interrompant cette communication lorsque la pression du fluide dans la première chambre est supérieure à un niveau déterminé.

Bien que fonctionnant de façon parfaite, cet actionneur présente l'inconvénient d'être difficile à purger, notamment sa deuxième chambre.

En outre, le moyen de valve mis en oeuvre dans cet actionneur reste sensible aux impuretés contenues dans le fluide.

Enfin, un élément central est toujours délicat à positionner et à ajuster.

La présente invention a pour but d'obvier à ces inconvénients.

Selon l'invention, une pièce présentant au moins un épaulement est solidaire, par son coté de plus faible diamètre, de l'extrémité du premier piston en regard de la première chambre ; un joint annulaire et une butée annulaire de forme complémentaire à cette pièce, mobiles en translation axiale, sont disposés entre la partie de plus grand diamètre de la pièce et l'extrémité du premier piston de manière à diviser la première chambre en deux volumes, l'un étant relié à un générateur de pression et l'autre communiquant par l'intermédiaire d'un perçage pratiqué dans l'extrémité du premier piston avec la deuxième chambre, les deux volumes communiquant ensemble au repos par un passage ménagé entre le joint, la butée et la pièce, tandis que le passage est fermé dès que l'épaulement vient en appui sur le joint annulaire.

De préférence, un ressort disposé dans le volume communiquant avec la deuxième chambre rappelle joint et butée en position de repos en appui sur une entretoise de manière à ouvrir le passage.

L'invention sera mieux comprise et d'autres buts, avantages et caractéristiques apparaîtront plus clairement à la lecture de la description qui suit d'un mode de réalisation préféré donné à titre non limitatif et à laquelle une planche de dessin est jointe sur laquelle :

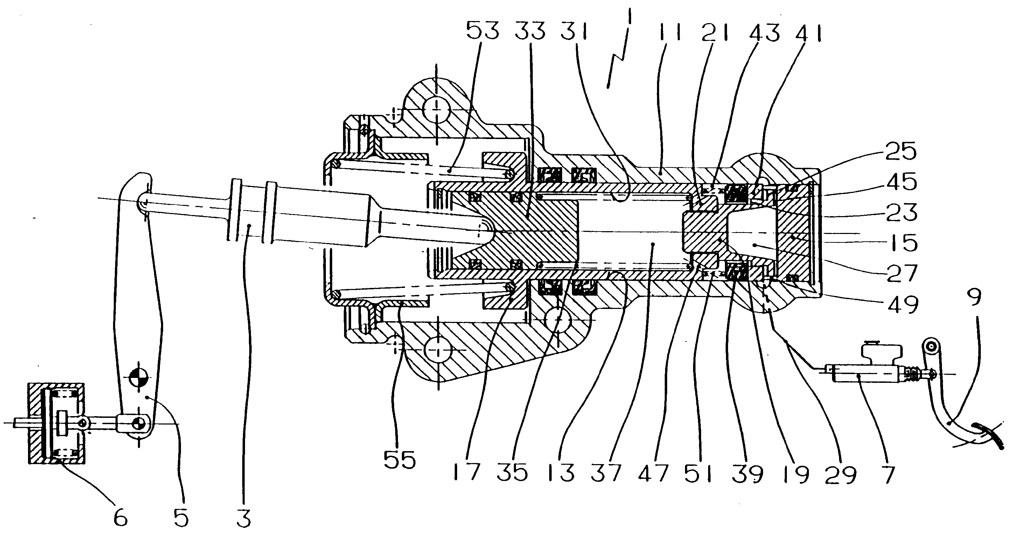

la Figure unique représente schématiquement en coupe un actionneur conforme à la présente invention utilisé pour une commande d'embrayage.

En référence maintenant à la Figure, l'actionneur représenté de manière simplifiée est un récepteur d'embrayage, agissant donc. par l'intermédiaire d'une tige de sortie 3 et d'un levier 5 sur un mécanisme d'embrayage 6.

L'émetteur d'embrayage 7 est un maître cylindre simple commandé par une pédale 9.

L'actionneur comporte donc un corps 11 dans lequel est formé un alésage 13, fermé par un bouchon étanche 15. Un piston 17 coulisse dans cet alésage 13. Un ressort de rappel 53, disposé entre le corps 11 et le piston 17 ramène ce dernier en position de repos en appui sur le bouchon 15.

Le piston 17 est solidaire, par son extrémité 21 en regard du bouchon 15, d'une pièce 19 présentant deux épaulements 23 et 25. Une chambre première 27 est donc déterminée entre le piston 17 et le bouchon 15, cette première chambre étant reliée par un conduit 29 à l'émetteur 7 qui constitue un générateur de pression pour le fluide d'actionnement qui est généralement constitué par une huile.

Un alésage borgne 31 est pratiqué dans le piston 17, et un deuxième piston 33 y coulisse. La tige de sortie 3 prend appui sur ce deuxième piston 33. Une deuxième chambre 37 est donc ménagée à l'intérieur du piston 17 entre son extrémité 21 et le piston 33, lesquels sont maintenus écartés par un ressort 35. Un joint annulaire 39 et une butée annulaire 41 de forme sensiblement complémentaire à celle de la pièce 19 et mobiles en translation axiale, sont disposés entre l'épaulement 25 qui constitue la partie de plus grand diamètre de la pièce 19 et l'extrémité 21 du piston 17. L'épaulement 23 de la pièce 19 est prévu pour être susceptible de venir s'appuyer sur une face latérale du joint 39. Le joint annulaire 39 et la butée 41 séparent la première chambre 27 en deux volumes distincts 43 et 45. Le volume 45 est relié en permanence à l'émetteur 7, tandis que le volume 43 est relié en permanence à la deuxième chambre 37 par l'intermédiaire d'au moins un perçage 47.

Au repos, les deux volumes 43 et 45 communiquent entre eux par un passage ménagé entre le joint 39, la butée 41 et la pièce 19. Dans ce but, la butée 41 vient en appui au repos sur une entretoise 49 sous l'effet d'un ressort 51 disposé entre l'extrémité 21 du piston 17 et le joint annulaire 39, de telle manière que l'épaulement 23 de la pièce 19 ne vienne pas au repos en appui sur le joint 39 annulaire pour assurer l'ouverture de la valve.

Une butée 55 est prévue pour limiter la course du piston 17.

Le fonctionnement de l'actionneur est le suivant. Au repos donc, comme indiqué précédemment et comme représenté sur la Figure, toutes les chambres communiquent entre elles et avec l'émetteur 7. Lorsque le conducteur enfonce la pédale 9, la pression dans la première chambre 27 déplace (vers la gauche sur la Figure) le piston 17. Ce faisant, l'épaulement 23,de la pièce 19 vient en appui sur la face latérale du joint 39, ce qui interrompt toute communication entre les deux volumes 43 et 45. La deuxième chambre 37 et le volume 43 sont donc totalement isolés. Il se crée ainsi un mur hydraulique interdisant au piston 33 de se mouvoir par rapport au piston 17. L'ensemble des deux pistons coulisse alors sous l'effet de la pression du fluide dans le volume 45. Le frottement du joint 39 sur l'alésage 13 et le ressort 51 empêchent tout mouvement du joint 39 et de la butée 41 tant que l'épaulement 23 n'entre pas en contact avec le joint 39.

Au relâchement de la pédale 9, la communication entre les deux volumes 43 et 45 se rétablit lorsque le piston 17 reprend sa position de repos.

S'il y a eu usure de l'embrayage, la tige de sortie 3 met le piston 33 dans la position appropriée à l'encontre du ressort 35, puisqu'il n'y a plus de mur hydraulique au repos. L'usure est donc ainsi automatiquement rattrapée.

La purge est rendue aisée du fait des perçages 47 qui favorisent l'évacuation éventuelle des gaz du fluide.

L'homme du métier pourra apporter de nombreuses modifications à l'invention sans pour autant sortir du cadre de l'invention telle que défini par les revendications annexées.

Par exemple, le bouchon 15 pourra être rendu amovible pour certains cas d'utilisation.

En outre, la butée 55 peut-être rendue réglable pour ajuster la course désirée du piston 17.

## Revendications

1. Actionneur hydraulique (1) à rattrapage automatique d'usure comprenant un corps (11) dans lequel est formé un alésage borgne (13) où coulisse de façon étanche un premier piston (17) sous l'effet de la pression d'un fluide dans une première chambre (27), un deuxième piston (33) étant monté à coulissement dans un alésage (31) pratiqué dans ledit premier piston (17) et sur lequel une tige de sortie (3) prend appui, une deuxième chambre (37) étant ainsi définie entre lesdits premier et deuxième pistons, un moyen de valve (39,41,23) étant prévu pour assurer une communication hydraulique entre les première et deuxième chambres (27, 37) lorsque ledit actionneur (1) est au repos et interrompant cette communication lorsque la pression du fluide dans la première chambre (27) est supérieure à un niveau déterminé, caractérisé en ce qu' une pièce (19) présentant au moins un épaulement (23) est solidaire, par son côté de plus faible diamètre, de l'extrémité (21) dudit premier piston (17) en regard de ladite première chambre (27), qu'un joint annulaire (39) et une butée annulaire (41) de forme complémentaire à ladite pièce (19), mobiles en translation axiale, sont disposés entre la partie de plus grand diamètre de ladite pièce (19) et l'extrémité (21) dudit premier piston (17) de manière à diviser ladite première chambre (27) en deux volumes (43, 45), l'un (45) étant relié à un générateur de pression (7) et l'autre (43) communiquant par l'intermédiaire d'au moins un perçage (47) pratiqué dans l'extrémité (21) dudit premier piston (17) avec ladite deuxième chambre (37), lesdits deux volumes (43, 45) communiquant ensemble au repos par un passage ménagé entre ledit joint annulaire (39), ladite butée (41) et ladite pièce (19) tandis que ce dernier est fermé dès que ledit épaulement (23) vient en appui sur ledit joint annulaire (39).

2. Actionneur hydraulique selon la revendication 1, caractérisé en ce qu un ressort (51) disposé dans le volume (43) communiquant avec ladite deuxième chambre (37) rappelle joint annulaire (39) et butée (41) en position de repos en appui sur une entretoise (49) de manière à ouvrir ledit passage.

## Claims

1. Hydraulic actuator (1) with automatic wear take-up, comprising a body (11), in which is formed a blind bore (13) where a first piston (17) slides sealingly under the effect of the pressure of a fluid in a first chamber (27), a second piston (33) being mounted slide output rod (3) bearing on said second piston, a second chamber (37) thus being defined between said first and second pistons, a valve means (39, 41, 23) being provided for ensuring hydraulic communication between the first and second chambers (27, 37) when said actuator (1) is at rest and interrupting this communication when the pressure of the fluid in the first chamber (27) is higher than a specific level, characterized in that a piece (19) having at least one shoulder (23) is fixed, on its side of smaller diameter, to the end (21) of said first piston (17) confronting said first chamber (27), and in that an annular gasket (39) and an annular stop (41) of a shape complementary with said piece (19) and movable in axial translational motion are arranged between the part of larger diameter of said piece (19) and the end (21) of said first piston (17), so as to divide said first chamber (27) into two volumes (43, 45), one (45) being connected to a pressure generator (7) and the other (43) communicating with said second chamber (37) by way of at least one duct (47) made in the end (21) of said first piston (17), said two volumes (43, 45) communicating with one another, at rest, via a passage provided between said annular gasket (39), said stop (41) and said piece (19), while this is closed as soon as said shoulder (23) comes to bear on said annular gasket (39).

2. Hydraulic actuator according to claim 1, characterized in that a spring (51) arranged in the volume (43) communicating with said second chamber (37) returns the annular gasket (39) and stop (41) to the rest position bearing on a spacer (49), so as to open said passage.

## Patentansprüche

1. Hydraulikantrieb (1) mit automatischer Nachstellvorrichtung mit einem Körper (11), in dem eine Blindbohrung (13) ausgebildet ist, in welcher ein erster Kolben (17) unter der Wirkung des Drucks eines Fluids in einer ersten Kammer (27) dicht gleitet, wobei ein zweiter Kolben (33) gleitend in einer in dem ersten Kolben (17) vorgesehenen Bohrung (31) gelagert ist, an der ein Ausgangsstift (3) anliegt, wodurch zwischen dem ersten und dem zweiten Kolben eine zweite Kammer (37) gebildet ist, und wobei ein Ventilmittel (39, 41, 23) vorgesehen ist, um eine hydraulische Verbindung zwischen der ersten und der zweiten Kammer (27, 37) herzustellen, wenn sich der Antrieb (1) in der Ruhestellung befindet, und die Verbindung zu unterbrechen, wenn der Druck des Fluids in der ersten Kammer (27) über einem bestimmten Pegel liegt, dadurch gekennzeichnet, daß ein Stück (19), das wenigstens eine Schulter (23) aufweist, über seine Seite mit kleinerem Durchmesser mit dem Ende (21) des ersten Kolbens (17) gegenüber der ersten Kammer (27) fest verbunden ist, daß eine ringförmige Dichtung (39) und ein ringförmiger Anschlag (41) mit einer zu dem Stück (19) komplementären Form in Axialverschiebung beweglich zwischen dem Teil des Stücks (19) mit dem größeren Durchmesser und dem Ende (21) des ersten Kolbens (17) so angeordnet sind, daß die erste Kammer (27) in zwei Räume (43, 45) unterteilt ist, wobei der eine (45) mit einem Druckgenerator (7) verbunden ist und der andere (43) über wenigstens eine im Ende (21) des ersten Kolbens (17) vorgesehene Öffnung (47) mit der zweiten Kammer (37) in Verbindung steht, wobei die beiden Räume (43, 45) in der Ruhestellung über einen zwischen der ringförmigen Dichtung (39), dem Anschlag (41) und dem Stück (19) angebrachten Durchgang in Verbindung stehen, während dieser geschlossen ist, sobald die Schulter (23) an der ringförmigen Dichtung (39) in Anlage gelangt.

2. Hydraulikantrieb nach Anspruch 1, dadurch gekennzeichnet, daß eine in dem mit der zweiten Kammer (37) in Verbindung stehenden Raum (43) angeordnete Feder (51) die ringförmige Dichtung (39) und den Anschlag (41) in der Ruhestellung in Anlage an eine Strebe (49) zurückstellt, so daß der Durchgang geöffnet ist.
